# EUROPÄISCHE PATENTSCHRIFT

(11) **EP 4 151 447 B1**
(45) Veröffentlichungstag und Bekanntmachung des Hinweises auf die Patenterteilung: **04.11.2026**
(21) Anmeldenummer: 22195026.4
(22) Anmeldetag: 12.09.2022
(51) Int. Cl.: B60L 15/38, B60L 9/00, B60L 7/10, B60L 15/32, B60L 50/53, B61C 3/02

(54) **REICHWEITENERHÖHUNG BEI MEHRFACHTRAKTION**
COVERAGE ENHANCEMENT IN MULTIPLE TRACTION
AMÉLIORATION DE LA COUVERTURE DANS DES TRAJETS MULTIPLES

(30) Priorität: 17.09.2021 DE 102021210361
(43) Veröffentlichungstag der Anmeldung: 22.03.2023
(73) Patentinhaber: Siemens Mobility GmbH, 80997 München (DE)
(72) Erfinder: Schmitt, Volker, 91052 Erlangen (DE); Burg, Wilhelm, 96052 Bamberg (DE); Ruppert, Swen, 91096 Möhrendorf (DE)
(74) Vertreter: Siemens Patent Attorneys

(56) Entgegenhaltungen:
- DE-A1- 102018 209 583
- US-B2- 10 647 203

## Beschreibung

Die Erfindung eignet sich für Fahrzeuge, insbesondere Schienenfahrzeuge, die Stromabnehmer zur Aufnahme externer elektrischer Energie während des Befahrens eines elektrifizierten Streckenabschnitts oder während eines Halts aufweisen, und interne Energiespeicher, die gespeicherte Energie zum Befahren eines nichtelektrifizierten Streckenabschnitts zur Verfügung stellen.

Schienenfahrzeuge mit Energiespeichern beispielsweise in Form von Batterien sind üblicherweise Batteriehybrid-Fahrzeuge, d.h. sie können als elektrisches Fahrzeug unter Oberleitung fahren und dabei die Batterie aufladen und auf nicht elektrifizierten Strecken mit gesenktem Stromabnehmer aus der Batterie gespeist fahren. Während der Fahrt auf der nicht elektrifizierten Strecke kann die Batterie beim elektrischen Bremsen aufgeladen werden.

Grundsätzlich existieren für batterieangetriebene Fahrzeuge zwei Paare von gegenläufigen Zielen, zwischen denen jeweils ein Kompromiss zu finden ist:
- Einerseits muss mit der vorhandenen Energie der Batterien gehaushaltet werden, weshalb insbesondere Spitzfahrten zu vermeiden sind, welche zu einer minimalen Fahrzeit zwischen zwei Haltepunkten in der Weise führen, dass das Fahrzeug stark beschleunigt wird, dann mit konstanter (maximal zulässiger Höchst-) Geschwindigkeit fährt, und gerade rechtzeitig vor Erreichen des nächsten Haltepunktes stark abgebremst wird; andererseits ist der Fahrplan einzuhalten, was durch diese Fahrweise erleichtert wird.
- Einerseits soll die Lebensdauer der Batterien möglichst lange erhalten bleiben, weshalb eine häufige starke Batterieentladung ungünstig ist; andererseits gilt es, die Reichweite auf nicht-elektrifizierten Strecken zu maximieren.

Bei vielen Strecken ist es günstig, dass Züge in Doppel- oder Mehrfachtraktion fahren. Dies bedeutet, dass ein Zug zwei oder mehrere Triebfahrzeuge aufweist, welche auch entkoppelt werden und getrennt weiterfahren können; dies wird als Zugteilung oder Flügelung bezeichnet. Dies ermöglicht es, unterschiedliche Fahrziele umsteigefrei anzubieten. Ferner werden durch die Doppel- oder Mehrfachtraktion Fahrplantrassen und Personal eingespart.

Das Dokument DE 102018209583 A1 schlägt einen Weg vor, um trotz einer Störung in den elektrischen Netzwerken von einem der Fahrzeuge eines Verbundes nach wie vor elektrische Energie bereitzustellen, um ein elektrisches Bordnetzwerk dieses Fahrzeugs weiter betreiben zu können. Es erfolgt die Versorgung eines Gleichspannungs-Zwischenkreises nicht wie im störungsfreien Betrieb über die Netzspannungsquelle, sondern über die im Generatorbetrieb betriebenen Antriebsmaschinen. Hierzu übernimmt das nicht gestörte Fahrzeug das Erzeugen der Fortbewegung und zieht oder schiebt das nicht länger antriebsfähigen Fahrzeug in die gewünschte Richtung.

US10647203B2 beschreibt einen Fahrzeugverband mit mehreren elektrischen Fahrzeugen, die je nach Bedarf während der Fahrt geladen werden können.

Der Erfindung liegt die Aufgabe zugrunde, ein Verfahren zum Betreiben eines Fahrzeugverbands in Doppel- oder Mehrfachtraktion aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient dem Betreiben eines Fahrzeugverbands in Doppel- oder Mehrfachtraktion. Hierbei umfasst der Fahrzeugverband zumindest ein erstes und ein zweites Fahrzeug. Die Fahrzeuge weisen jeweils mindestens einen Stromabnehmer zum Fahren auf einer elektrifizierten Strecke und mindestens einen Energiespeicher zum Fahren auf einer nicht-elektrifizierten Strecke auf. Beim Fahren in Doppel- oder Mehrfachtraktion auf einer nicht-elektrifizierten Strecke erfolgt der Antrieb des Fahrzeugverbands unterschiedlich durch das erste verglichen mit dem zweiten Fahrzeug. Hierbei hängt das Ausmaß der Unterschiedlichkeit von einer von dem zweiten Fahrzeug nach Beendigung der Doppel- oder Mehrfachtraktion im Energiespeicher benötigten Energie ab.

Beim Fahren auf einer nicht-elektrifizierten Strecke müssen die Energiespeicher der Fahrzeuge zum Antrieb des Fahrzeugverbands herangezogen werden. Das Antreiben wird nicht symmetrisch auf das erste und das zweite Fahrzeug verteilt, d.h. die Antriebe des ersten und des zweiten Fahrzeugs werden nicht in gleicher Weise genutzt, vielmehr tragen das erste und das zweite Fahrzeug in unterschiedlichem Ausmaß bei. Wie groß diese Asymetrie ist, hängt davon ab, wie viel Energie das zweite Fahrzeug nach Beendigung der Doppel- oder Mehrfachtraktion in seinem Energiespeicher benötigt. Die benötigte Energiemenge kann z.B. aus der von dem zweiten Fahrzeug zu befahrenden Strecke bestimmt werden, z.B. als Mindestladungszustand des Energiespeichers.

Der unterschiedliche Antrieb durch das erste und das zweite Fahrzeug ermöglicht es, zu berücksichtigen, dass die beiden Fahrzeuge, nachdem sie getrennt wurden, voneinander verschiedene Strecken fahren. Mittels des beschriebenen Verfahrens kann während der Doppel- oder Mehrfachtraktion eine Umverteilung von Energie zwischen den Energiespeichern der beiden Fahrzeuge erfolgen, indem diese in unterschiedlichem Maß entleert und/oder geladen werden. Letztendlich kann hierdurch erreicht werden, dass die Energiespeicher der beiden Fahrzeuge gleich ausgelegt sein können.

Außer dem ersten und dem zweiten Fahrzeug kann das Verfahren auf eine größere Anzahl von in Mehrfachtraktion betriebenen Fahrzeugen angewandt werden. Wie auch das erste und das zweite Fahrzeug können diese mehreren Fahrzeuge gleich oder unterschiedlich aufgebaut und motorisiert sein.

Für die konkrete Ausgestaltung der Unterschiedlichkeit des Antriebs gibt es mehrere Möglichkeiten:
- das erste Fahrzeug kann mehr antreiben als das zweite Fahrzeug,
   und/oder
- das zweite Fahrzeug kann mehr elektrisch bremsen als das erste Fahrzeug,
   und/oder
- das erste Fahrzeug treibt an, während gleichzeitig das zweite Fahrzeug elektrisch bremst.

Noch konkreter kann dies folgendermaßen umgesetzt werden: bei der Beschleunigung des Fahrzeugverbands gibt das erste Fahrzeug mehr Traktionsleistung ab als das zweite Fahrzeug; dieses Vorgehen kann insbesondere in Phasen der Beschleunigung mit konstanter Traktionsleistung beider Fahrzeuge oder bei Beschleunigung mit zunehmender Traktionsleistung beider Fahrzeuge realisiert werden.

Bei einer Beschleunigung des Fahrzeugverbands aus dem Stillstand heraus kann die Unterschiedlichkeit des Antriebs umgesetzt werden, indem die Beschleunigung zunächst gleich durch das erste und das zweite Fahrzeug erfolgt, die beiden Fahrzeuge also im Vergleich zueinander die gleiche Zugkraft und die gleiche Beschleunigungsleistung aufbringen, und im Anschluss bis zum Ende der Beschleunigung mehr durch das erste als durch das zweite Fahrzeug.

Bei einer Beschleunigung des Fahrzeugverbands aus dem Stillstand heraus kann die Unterschiedlichkeit des Antriebs auch umgesetzt werden, indem die Beschleunigung zunächst gleich durch das das erste und das zweite Fahrzeug erfolgt, die beiden Fahrzeuge also im Vergleich zueinander die gleiche Zugkraft und die gleiche Beschleunigungsleistung aufbringen, dann mehr durch das erste als durch das zweite Fahrzeug, und im Anschluss bis zum Ende der Beschleunigung wieder gleich durch das das erste und das zweite Fahrzeug.

Vorteilhaft ist es auch, wenn bei Fahren des Fahrzeugverbands mit konstanter Geschwindigkeit die hierfür erforderliche Traktionsleistung vollständig oder überwiegend von dem ersten Fahrzeug erbracht wird. Außer dieser Phase der Beharrungsfahrt kann eine Energieumverteilung auch beim Abbremsen erfolgen: beim elektrischen Abbremsen des Fahrzeugverbands kann das zweite Fahrzeug, insbesondere bei Beschleunigung mit betragsmäßig abnehmender Traktionsleistung, mehr Bremsenergie rekuperieren als das erste Fahrzeug.

Die Asymetrie beim Antreiben des Fahrzeugverbands kann zielgerichtet eingeführt werden, um einen bestimmten Zustand nach Beendigung der Doppel- oder Mehrfachtraktion vorliegen zu haben. So ist es vorteilhaft, das Ausmaß der Unterschiedlichkeit so einzustellen, dass nach Beendigung der Doppel- oder Mehrfachtraktion die in den Energiespeichern des ersten und des zweiten Fahrzeugs gespeicherte Energie jeweils ausreichend ist für das Erreichen der nächsten Energiespeicher-Lademöglichkeit oder der erneuten Aufnahme der Doppel- oder Mehrfachtraktion. Diese Aufnahme der Doppel- oder Mehrfachtraktion kann auch eine solche mit einem oder mehreren anderen Fahrzeugen sein, d.h. anstelle oder zusätzlich zu dem ersten und/der dem zweiten Fahrzeug kann die Doppel- oder Mehrfachtraktion mit einem oder mehreren anderen Fahrzeugen erfolgen. Zusätzlich oder alternativ kann das Ausmaß der Unterschiedlichkeit so eingestellt werden, dass nach Beendigung der Doppel- oder Mehrfachtraktion das Verhältnis der in den Energiespeichern des ersten und des zweiten Fahrzeugs gespeicherten Energiemengen gleich dem Verhältnis der für die weitere Fahrt benötigten Energiemengen ist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Hierzu kann ein Computerprogramm Vorgaben berechnen, deren Umsetzung das erfindungsgemäße Verfahren ablaufen lässt. In Ausgestaltung der Erfindung weist das Computerprogramm ferner auf: Mittel zum Ermitteln eines Geschwindigkeitsverlaufs für eine Strecke abhängig von einer vorgegebenen Fahrzeit und einem vorgegebenen Ausmaß der Unterschiedlichkeit. Dieses vorgegebene Ausmaß der Unterschiedlichkeit kann sich daraus ergeben, wie viel Energie im Energiespeicher des zweiten Fahrzeugs nach Beendigung der Doppel- oder Mehrfachtraktion vorhanden sein soll.

Im Folgenden wird die Erfindung anhand eines Ausführungsbeispiels näher erläutert. Dabei zeigen:
- Figur 1:: ein elektrisch angetriebenes Fahrzeug,
- Figur 2:: Details des elektrisch angetriebenes Fahrzeugs der Figur 1,
- Figur 3:: schematisch einen Fahrtablauf mit Doppeltraktion,
- Figur 4:: den Ladezustand von Energiespeichern bei einer Fahrt gemäß Figur 3,
- Figur 5:: eine erste Möglichkeit des asymmetrischen Antriebs bei Doppeltraktion,
- Figur 6:: eine zweite Möglichkeit des asymmetrischen Antriebs bei Doppeltraktion,
- Figur 7:: Geschwindigkeitsprofile verschiedener Fahrten,
- Figur 8:: eine dritte Möglichkeit des asymmetrischen Antriebs bei Doppeltraktion.

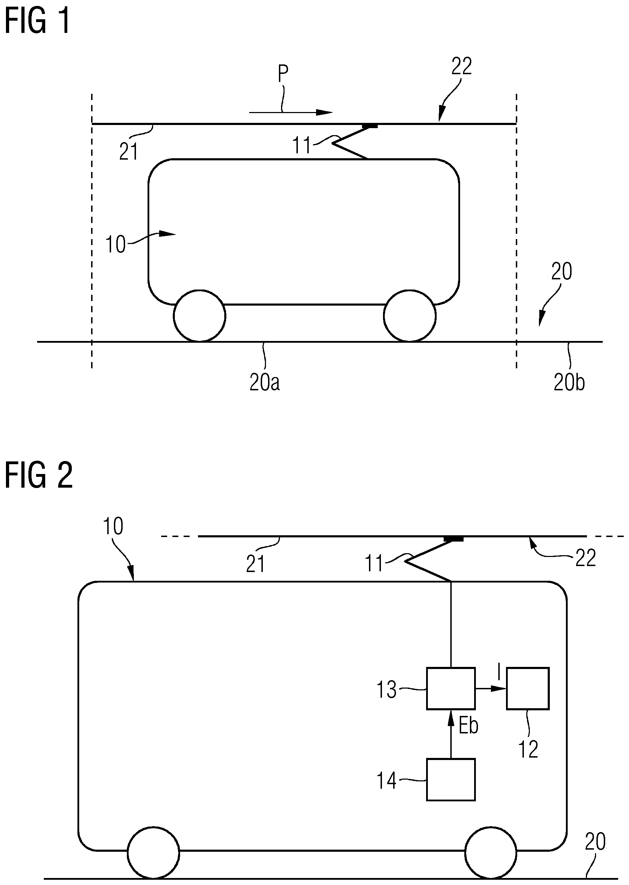

Die Figur 1 zeigt ein elektrisch angetriebenes Fahrzeug 10, das über einen oder mehrere Stromabnehmer 11 mit einer Stromschiene oder einer Oberleitung 21 eines externen Energieversorgungssystems 22 einer nur angedeuteten Strecke 20 in Verbindung steht. Bei dem Fahrzeug 10 handelt es sich vorzugsweise um ein Schienenfahrzeug.

Die Figur 1 zeigt das Fahrzeug 10 während des Befahrens eines elektrifizierten Streckenabschnitts 20a und vor dem Einfahren in einen nachfolgenden nichtelektrifizierten Streckenabschnitt 20b, wie durch einen Pfeil mit dem Bezugszeichen P angedeutet ist.

Die Verwendung von batterieangetriebenen Zügen ist vorteilhaft, da sie Dieselfahrzeuge ersetzen können, welche ansonsten auf nicht elektrifizierten Strecken zum Einsatz kommen. Hierdurch wird der unerwünschte Schadstoffausstoß von Dieselfahrzeugen vermieden. Die elektrische Traktion mittels Batterie weist ähnliche Eigenschaften wie die Dieseltraktion auf, nämlich eine hohe Zugkraft bei eher geringer Leistung. Dies entspricht der Möglichkeit einer hohen Beschleunigung und dem Fahren mit nicht allzu hoher konstanter Geschwindigkeit nach Abschluss der Beschleunigung. Diese Anforderung wird an viele Regionalzüge gestellt, welche entlegene nicht elektrifizierte Strecken befahren, auf welchen keine hohen Geschwindigkeiten möglich sind.

Die Figur 2 zeigt das Fahrzeug 10 gemäß Figur 1 näher im Detail. Das Fahrzeug 10 umfasst einen internen Energiespeicher 12, der die zum Befahren des nichtelektrifizierten Streckenabschnitts 20b benötigte Fahrenergie zur Verfügung stellt. Im folgenden wird davon ausgegangen, dass es sich bei dem Energiespeicher um eine aufladbare Batterie bzw. ein System aus vielen aufladbaren Batterien handelt. Anstelle einer Traktionsbatterie können grundsätzlich auch andersartige Energiespeicher zum Einsatz kommen, wie z.B. Hochleistungskondensatoren.

Der Energiespeicher 12 wird während des Befahrens des elektrifizierten Streckenabschnitts 20a über ein Ladegerät 13 mittels eines Ladestroms I aufgeladen. Die elektrische Energie zum Laden kann über den Stromabnehmer 11 aus dem externen Energieversorgungssystem 22 entnommen werden. Dies geschieht an Haltepunkten, die in elektrifizierten Streckenabschnitten liegen, an Oberleitungsinselanlagen, die einzelne Haltepunkte über eine Oberleitung in einem begrenzten Bereich versorgen, sowie während der Fahrt unter einem Fahrdraht. Alternativ kann die Aufladung des Energiespeichers 12 über einen Antrieb 14 erfolgen, wenn beim Bremsen des Fahrzeugs 10 Bremsenergie Eb zur Verfügung steht, also durch regenerativ zurückgewonnene elektrische Energie. Der Antrieb 14 kann eine oder auch mehrere Antriebseinheiten aufweisen.

Das Fahrzeug der Figuren 1 und 2 dient üblicherweise dem Transport von Passagieren. Der Übersichtlichkeit halber ist der Passagierraum nicht in den Figuren dargestellt.

Im Vergleich zu bisherigen dieselbetriebenen Fahrzeugen ist die Reichweite von batterieelektrischen Fahrzeugen begrenzt, was durch die begrenzte Kapazität der Batterie bedingt ist.

Die Batteriegröße ist in Hinsicht auf Bauraum, Gewicht und vor allem Kosten ein entscheidender Faktor bei der Fahrzeugauslegung. Es ist daher wünschenswert, nicht allzu große Batterien einsetzen zu müssen, und dennoch eine ausreichende Reichweite auf nichtelektrifizierten Strecken zu erzielen.

Zwei oder mehrere der in den Figuren 1 und 2 gezeigten Fahrzeuge können in Doppel- oder Mehrfachtraktion betrieben werden. Mehrfachtraktion bedeutet, dass mehrere Triebwägen aneinander gekuppelt werden und gemeinsam fahren. Diese können auch wieder entkuppelt werden und getrennt weiterfahren. Die in Doppel- oder Mehrfachtraktion fahrenden Fahrzeuge müssen hierbei nicht die gleichen sein; vielmehr können sie sich hinsichtlich Größe und Motorisierung voneinander unterscheiden.

Die Mehrfachtraktion weist v.a. den Vorteil auf, dass zum Antreiben von n miteinander gekoppelten Fahrzeugen nicht die n-fache Energie im Vergleich zum Antreiben eines einzelnen Fahrzeugs benötigt wird. Dies liegt an der Reduzierung des Luftwiderstandes. Ferner ist der Personalaufwand geringer, da beim Fahren in Mehrfachtraktion nur ein Triebzugführer benötigt wird. Auch die Strecken - und Sitzplatzkapazität lässt sich durch Mehrfachtraktionsfahrten besser ausnutzen.

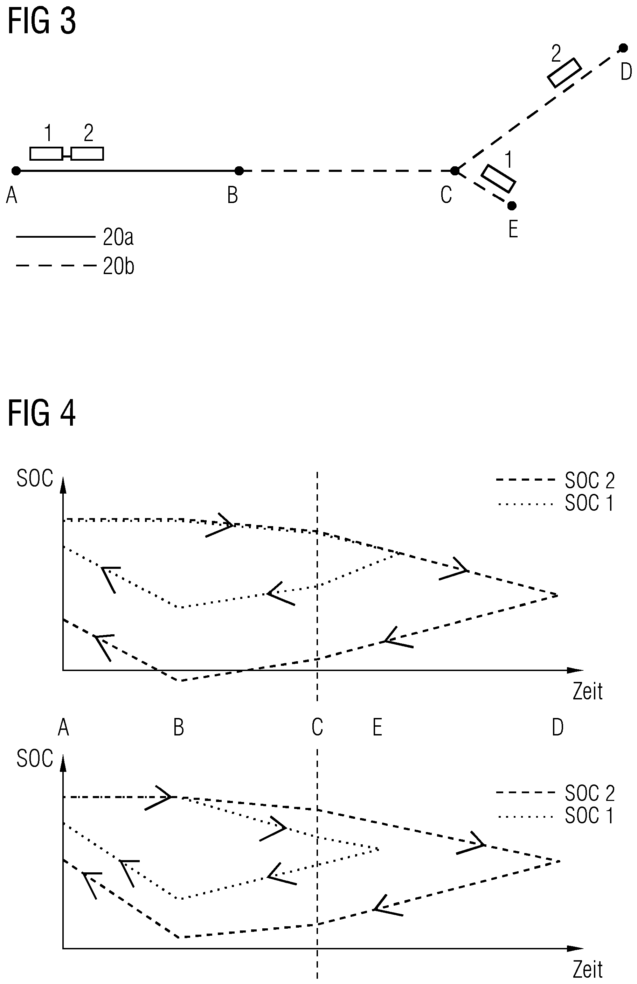

Figur 3 zeigt ein Beispiel für eine typische Konstellation mit Doppeltraktion. Fahrzeug 1 und Fahrzeug 2 fahren ab Punkt A in Doppeltraktion im elektrifizierten Bereich 20a, um ab Punkt B mit normalerweise vollgeladenen Batterien in einen nicht elektrifizierten Bereich 20b zu gelangen. An einem Punkt C wird der Zug in zwei Zugteile, nämlich in Fahrzeug 1 und Fahrzeug 2, geteilt (Flügeln). Fahrzeug 2 fährt die Teilstrecke zum Punkt D, und Fahrzeug 1 die Teilstrecke 1 zum Punkt E. Eine solche Kopplung und Entkopplung von Fahrzeugen findet z.B. bei Fahrten von einem urbanen Zentrum in die Peripherie statt.

Hierbei ist der Energieverbrauch zwischen den Punkten C und D deutlich höher als derjenige zwischen den Punkten C und E, da letztere Strecke deutlich kürzer ist. Der unterschiedliche Energiebedarf kann außer durch die Länge der Strecke auch durch unterschiedliche Steigungen bedingt sein. Eine weitere - nicht in der Figur dargestellte - Ursache für den unterschiedlichen Energiebedarf auf den Teilstrecken nach der Trennung der Zugteile kann darin bestehen, dass sich die Teilstrecken in Hinblick auf ihre Elektrifizierung unterscheiden, oder dass sich die Beladungen oder von den Fahrzeugen erfahrenen Windverhältnisse voneinander unterscheiden.

Bei der Rückfahrt kommt es dann meist zum umgekehrten Scenario. Fahrzeug 2 fährt von Punkt D nach Punkt C und Fahrzeug 1 von Punkt E nach Punkt C. In Punkt C kuppeln die beiden Zugteile und fahren gemeinsam weiter Richtung Punkt B zum elektrifizierten Streckenabschnitt 20a.

Um einen sicheren Betrieb der Züge zu gewährleisten, müssen die Fahrzeuge mit ausreichend Batteriekapazität ausgestattet werden. Eine Möglichkeit wäre, alle Fahrzeuge mit der maximal notwendigen Kapazität auszustatten. Im Beispiel der Figur 3 wäre dies die Teilstrecke zwischen den Punkten B und D mit dem deutlich höherem Energieverbrauch. Dies würde dazu führen, dass alle Fahrzeuge mit der Maximalausstattung an großen, teuren und schweren Batterien fahren. Eine Alternative wäre, Fahrzeuge mit verschieden Ausstattungen an Batteriekapazitäten vorzuhalten. Dies ermöglicht zwar bei einem Teil der Fahrzeuge, Batterien zu sparen, führt aber durch eine uneinheitliche Flotte zu schwerwiegenden Nachteilen bei der Disposition, Vorhaltung von Ersatzzügen, Instandhaltung, mangelnder Flexibilität bei Zugausfällen bis hin zu erhöhten Aufwänden bei der Entwicklung, Test und Zulassung der Züge. Eine dritte Möglichkeit wäre, zusätzliche Lademöglichkeiten zu installieren, was aber zu hohen Infrastrukturkosten führt und ggf. den Betriebsstart verzögert.

Figur 4 zeigt den Ladezustand SOC der Batterien der beiden Fahrzeuge der Figur 3, wobei mit SOC 1 der Ladezustand der Batterie des Fahrzeugs 1, und mit SOC 2 der Ladezustand der Batterie des Fahrzeugs 2 bezeichnet ist. Der obere Graph der Figur 4 zeigt den Verlauf des Ladezustandes bei einer Fahrt gemäß Figur 3 nach dem Stand der Technik. Die Fahrt startet am Punkt A und erfolgt bis zum Punkt B auf elektrifizierter Strecke. Dementsprechend werden die Batterien nicht zum Antrieb der Fahrzeuge benötigt, so dass der Ladezustand konstant auf voller Ladung bleibt, entsprechend der horizontalen Linie.

Bei Punkt B erreichen die beiden Fahrzeuge in Doppeltraktion den nicht elektrifizierten Streckenabschnitt. Die Batterien beider Fahrzeuge werden zum Antrieb verwendet, so dass sie sich beide gleichmäßig entladen. Bei Punkt C findet die Entkopplung der beiden Fahrzeuge statt, so dass jede Batterie zum Antrieb des nun einzelnen Fahrzeugs verwendet wird. Da der energetische Vorteil der Doppeltraktion ab dem Punkt C wegfällt, entladen sich die Batterien nun stärker.

Das erste Fahrzeug kehrt bei Punkt E um und fährt zurück zu Punkt C, wo es wieder mit dem zweiten Fahrzeug gekoppelt wird. Bei Punkt B wird der elektrifizierte Streckenteil erreicht, auf welchem die Batterie wieder aufgeladen wird.

Das zweite Fahrzeug muss die längere Strecke bis zu Punkt D fahren, wo es umkehrt und bis zu Punkt C fährt, wo es wieder mit dem ersten Fahrzeug gekoppelt wird. Da auch in Doppeltraktion die Batterien beider Fahrzeuge zum Antrieb verwendet werden, entlädt sich die Batterie des zweiten Fahrzeugs auf dem Weg zum Punkt B so stark, dass ihre Größe nicht ausreichend zum Erreichen des Punktes B ist. Es wäre also nach dem Stand der Technik nötig, für das zweite Fahrzeug eine größere Batterie vorzusehen, welche für das erste Fahrzeug aber nicht benötigt wird. Alternativ zu diesem ungünstigsten Fall, dass der Punkt B vom zweiten Fahrzeug nicht erreicht werden kann, ist es auch möglich, dass dieser Punkt zwar erreicht wird, hierbei jedoch eine Komplettentladung oder sehr starke Entladung der Batterie des zweiten Fahrzeugs stattfindet. Dies ist schädlich für die Batterielebensdauer, so dass auch dies vermieden werden sollte.

Um dem unterschiedlichen Energiebedarf auf den unterschiedlichen Strecken gerecht zu werden, wird eine unterschiedliche Inanspruchnahme der Batterien der beiden Zugteile bei der Doppeltraktion gemäß dem unteren Graphen der Figur 4 vorgeschlagen:
Der Energieverbrauch der Doppel- bzw. Mehrfachtraktion sowohl beim Fahren als auch die regenerativ zurückgewonnene elektrische Energie beim Bremsen wird so gesteuert, dass die Aufteilung der verbleibenden Energie in den Batterien der beiden Fahrzeuge dem zu erwartenden benötigten Energieverbrauch auf der verbleibenden Fahrt bis zur nächsten Auflademöglichkeit entspricht. Damit reicht für beide Zugteile eine mittlere Batteriegröße und die Strecken können mit einer einheitlichen Flotte mit einer optimierten Batteriegröße betrieben werden.

So wird beim Fahren zwischen den Punkten B und C bevorzugt die Batterie des Fahrzeugs 1 verwendet, so dass diese Batterie sich stärker entlädt. Beim Bremsen, z.B. bei der Bergabfahrt oder vor einem Haltepunkt, wird das Fahrzeug 2 bevorzugt verwendet, so dass dessen Batterie stärker durch die regenerierte Bremsenergie geladen wird. Dies ist im unteren Graphen der Figur 4 daran zu erkennen, dass die SOC 1 Linie zwischen den Punkten B und C stärker abfällt als die SOC 2 Linie, und entsprechend ebenso auf dem Rückweg zwischen den Punkten C und B.

Diese ungleichmäßige Entladung der Batterien der unterschiedlichen Fahrzeuge wird so gesteuert, dass die beiden Batterien am Punkt C, an dem die Zugteile getrennt werden, einen Ladezustand haben, der ihnen eine Fahrt bis zur nächsten Lademöglichkeit ermöglicht. Da sich gemäß Figur 3 die nächste Lademöglichkeit erst auf der Rückfahrt ab Punkt B ergibt, muss der zu erwartende Energieverbrauch von Hin- und Rückfahrt berücksichtigt werden. Daher wird das vorgeschlagene Verfahren bei Hin- und Rückfahrt im Bereich der Doppeltraktion angewendet, d.h. die beiden Zugteile kuppeln bei der Rückfahrt am Punkt C wieder und fahren gemeinsam nach Punkt B, wobei zwischen Punkt C und B das beschriebene Verfahren wieder angewendet wird. Ab dem Punkt B ist die Strecke elektrifiziert und die Batterien können wieder geladen werden.

Für beide Fahrzeuge sollte der Ladezustand beim Flügeln am Punkt C derart sein, dass sie sicher den Punkt B wieder erreichen können. Zumindest jedoch muss ein sicheres Erreichen des Punktes C, wo erneut gekuppelt wird, gewährleistet sein. Ab diesem Punkt C reicht es aus, wenn der gemeinsame Ladezustand beider Batterien so ist, dass durch Fahren in Doppeltraktion ein sicheres Erreichen des Punktes B möglich ist.

Über dieses Kriterium des sicheren Erreichens der nächsten Auflademöglichkeit hinaus kann ferner eine proportionale Aufteilung der in den Batterien gespeicherten Energie gefordert werden. D.h. das Verhältnis der in den Batterien der beiden Fahrzeuge gespeicherten Energien sollte gleich dem Verhältnis der zu erwartenden Energieverbräuche bis zum erneuten Kuppeln der beiden Zugteile sein. Sollte - abweichend von der Darstellung der Figur 3 - für ein Fahrzeug vor dem erneuten Kuppeln im Laufe der Fahrt oder an einer Haltestelle eine Lademöglichkeit vorgesehen sein, so wird dies bei der Ermittlung des jeweilige zu erwartenden Energieverbrauchs berücksichtigt.

Wie der Vergleich des oberen mit dem unteren Graphen der Figur 4 zeigt, wird die nicht benötigte Batteriekapazität des Fahrzeugs 1 während der Doppeltraktionsfahrt genutzt, um dem gekuppelten Fahrzeug 2 mit dem ferneren Fahrtziel die benötigte Reichweite ohne weitere Ladezeitverluste zu ermöglichen.

Wie beschrieben wird während der Doppeltraktion die Batterie des Fahrzeugs 1 überwiegend zum Antrieb eingesetzt, und beim Bremsen überwiegend die Batterie des Fahrzeugs 2. Sollte dies nicht ausreichen, um die erwünschte Aufteilung der gespeicherten Energie entsprechend dem zu erwartenden Energieverbrauch der Zugteile zu erreichen, ist ein weiteres Verfahren zur Energieverschiebung möglich: während der Fahrt kann das Fahrzeug 1 antreiben, während gleichzeitig das Fahrzeug 2 regenerativ bremst. Damit wird die Batterie von Fahrzeug 1 mehr als zum Antrieb eigentlich nötig entladen und diejenige von Fahrzeug 2 mit der regenerierten Bremsenergie geladen. Da hierbei durch elektrische Verluste ein Teil der elektrischen Energie nicht nutzbar ist, sollte dies nur in Ausnahmefällen erfolgen. Es gibt jedoch Betriebssituationen, in denen dies durchaus sinnvoll sein kann. Dies ist z.B. der Fall, wenn durch Spitzfahrt ein hoher Anteil der Fahrt mit 100% Traktion bzw. 100% Bremskraft gefahren wird. Hier reicht das oben beschriebene normale Verfahren eventuell nicht aus, so dass während der Teil- oder Nulllastphasen, z.B. während der verbleibenden Phasen "Geschwindigkeit halten" und "Rollen" dieses zusätzliche Verfahren zur Verschiebung von Energie notwendig und sinnvoll sein kann. Im Extremfall kann sogar so vorgegangen werden, dass das Fahrzeug 1 beschleunigt und das Fahrzeug 2 gleichzeitig regenerativ bremst.

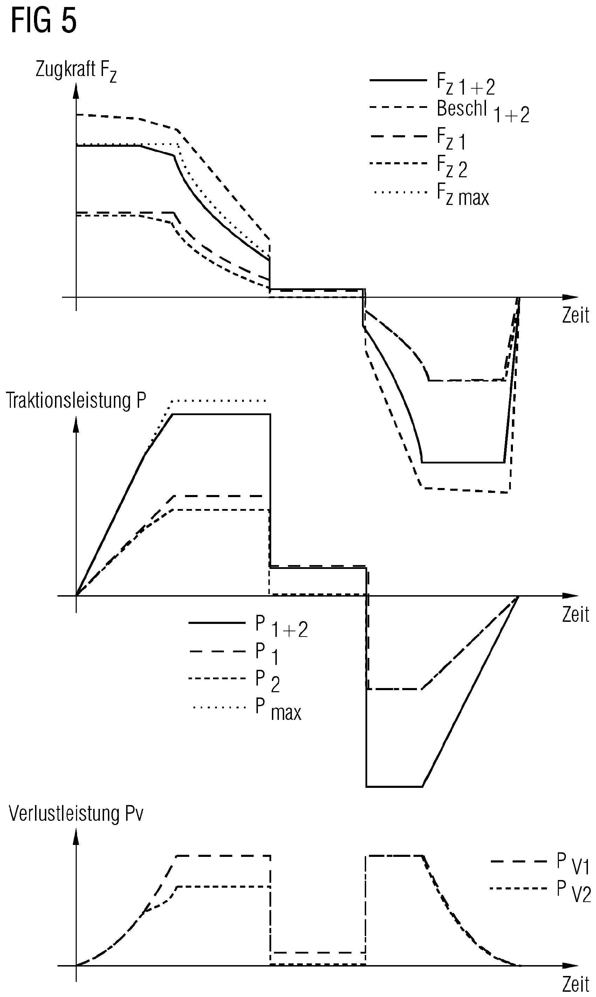

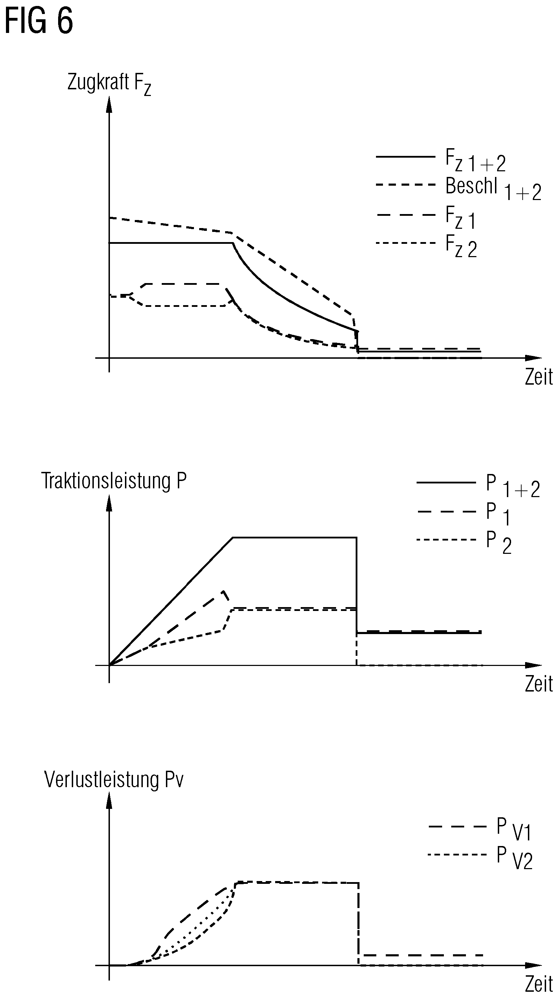

Die Figuren 5 und 6 zeigen konkrete Beispiele, wie bei Fahren auf nicht elektrifizierten Streckenabschnitten die Antriebskraft asymmetrisch auf die beiden gekuppelten Fahrzeuge aufgeteilt werden kann. Figur 5 zeigt eine erste mögliche Zugkraftverteilung, und zwar bei einer Volllastbeschleunigung mit anschließender Beharrungsfahrt mit konstanter Geschwindigkeit. Hier wird die Ungleichverteilung in der Phase der Beschleunigung mit Volllast eingeführt. Die gestrichelte Linie Beschl₁₊₂ zeigt hierbei die Beschleunigung des Zuges in Doppeltraktion vom Stillstand aus, über die Beharrungsfahrt mit konstanter Geschwindigkeit, und das Abbremsen bis zum erneuten Stillstand. Die hierfür insgesamt aufzubringende Zugkraft F_{z 1+2} wird durch die durchgezogene Linie repräsentiert. Diese Gesamtzugkraft F_{z 1+2} ergibt sich aus der Summe der Zugkräfte F_{z1} und F_{zs2} der beiden Fahrzeuge. Zu Beginn bringen beide Fahrzeuge die maximal mögliche Zugkraft auf, dies entspricht dem anfänglich horizontalen Verlauf der Zugkraftkurven F_{z1} und F_{z2} der beiden Fahrzeuge. Dies ermöglicht es dem Zug, rasch Geschwindigkeit zu gewinnen. Es ist vorteilhaft, da eine demgegenüber reduzierte anfängliche Beschleunigung mit großen Zeitverlusten einhergehen würde.

Der mittlere Graph der Figur 5 zeigt die für diese Fahrt aufgebrachte Traktionsleistung. Die insgesamt aufzubringende Traktionsleistung P₁₊₂ wird durch die durchgezogene Linie repräsentiert. Diese Gesamttraktionsleistung P₁₊₂ ergibt sich aus der Summe der Traktionsleistungen P₁ und P₂ der beiden Fahrzeuge. In der Beschleunigungsphase steigt die Traktionsleistung P₁ des ersten Fahrzeugs zunächst an, und ist dann bei Erreichen der Volllast konstant, entsprechend der Hyperbel der Zugkraft F_{z1}.

Wenn beide Fahrzeuge mit Volllast beschleunigen würden, ergäben sich hieraus die gepunkteten Kurven F_{z max} und Pₘₐₓ für die Zugkraft und die Beschleunigung. Die sich aufgrund der asymmetrischen Antriebskraftaufteilung ergebenden Kurven der Gesamtzugkraft F_{z 1+2} und der Gesamttraktionsleistung P₁₊₂ liegen nach der anfänglichen Beschleunigung unterhalb der gepunkteten Kurven F_{z max} und Pₘₐₓ. Denn die vom Fahrzeug 2 aufgebrachte Zugkraft F_{z2} ist gegenüber dem Volllastfall reduziert, um dessen Batterie weniger zu entladen. Im Volllastbereich erfolgt also eine gezielte Ungleichverteilung. Diese Ungleichverteilung bleibt auch während der Beharrungsfahrt, bei welcher der Zug mit konstanter Geschwindigkeit fährt, erhalten. Hier wird die Gesamttraktionsleistung P₁₊₂ vollständig vom Fahrzeug 1 aufgebracht.

Die gezeigte Ungleichverteilung der Figur 5 ist nur beispielhaft; insbesondere bei der Beharrungsfahrt kann alternativ eine Ungleichverteilung ungleich Null realisiert werden, z.B. wenn eine hohe Teillastleistung abgefordert wird wie bei einem Streckenverlauf mit Bergauffahrt.

Beim Teillastbetrieb, z.B. bei Konstantfahrt wie in Figur 5 gezeigt, kann also die Traktion des länger fahrenden Fahrzeugs 2 komplett abgeschaltet werden kann. Bei der Fahrt mit konstanter Geschwindigkeit ist die maximal auf der Strecke erlaubte Geschwindigkeit erreicht, so dass nicht die Traktion durch beide Fahrzeuge benötigt wird. Hat das Fahrzeug 1 mehrere separate Traktionsanlagen, kann die Übernahme der Traktionsleistung auch zusätzlich noch auf eine der beiden Traktionsanlagen verteilt werden und die eine oder mehreren anderen Traktionsanlagen abgeschaltet werden. So kann z.B. von den üblicherweise insgesamt vier vorhandenen Traktionsanlagen der zwei Fahrzeuge nur eine einzige Traktionsanlage antreiben. Diese Abschaltung ist sinnvoll, da es bei Teillast energieeffizienter ist, mit nur einer oder einer Teilmenge von mehreren Traktionsanlagen anzutreiben.

Gemäß Figur 5 wird also bei Beschleunigung mit Volllast die Traktionsleistung P₂ des länger fahrenden Fahrzeugs 2 leicht vermindert. Um den Fahrplan einzuhalten, ist eine Mindestgesamttraktionsleistung P₁₊₂ dennoch erforderlich, so dass das Potential der Minderung beschränkt ist. Beispielsweise kann diese Minderung ca dem niedrigeren Energieverbrauch in Doppeltraktion gegenüber demjenigen bei einzelner Fahrt der beiden Fahrzeuge entsprechen, dies sind ca. 3-4% des Energieverbrauchs.

Wie bereits erläutert, ist es vorteilhaft, die Traktionsleistung P₂ des Fahrzeugs 2 nicht bereits zu Beginn der Beschleunigung zu reduzieren, weil sich dies sehr ungünstig auf die Länge der Fahrzeit auswirkt. Wenn die Fahrzeuge schon auf eine gewisse Geschwindigkeit gebracht worden sind, relativiert dies den Zeitverlust durch die nun einsetzende geminderte Beschleunigung.

Ein weiterer Grund der erst später einsetzenden Reduktion ergibt sich aus der Abhängigkeit der Verlustleistung von der abgegebenen Traktionsleistung. Der untere Graph der Figur 5 zeigt die leistungsabhängige Verlustleistung P_{V1} und P_{V2} der beiden Fahrzeuge. Diese Verluste entsprechen größtenteils den Batterieverlusten. Es ist zu erkennen, dass die Verlustleistungen P_{V1} und P_{V2} mit zunehmender Leistungsabgabe mehr als linear ansteigen. Wegen dieser relativ hohen Verluste bei höheren Leistungen ist eine Leistungsminderung des länger fahrenden Fahrzeugs 2 energetisch tendenziell eher bei größeren Leistungen sinnvoll. Für die Batterie des Fahrzeugs 2 ergibt sich hierdurch also ein zweifacher Effekt: einerseits wird weniger Leistung zum Antrieb abgegeben, und andererseits reduzieren auch die kleineren Verluste die Beanspruchung der Batterie.

Außer den Batterieverlusten existieren noch andere leistungsabhängige Verluste, deren Höhe aber deutlich niedriger ist, so dass diese nicht in Figur 5 berücksichtigt sind.

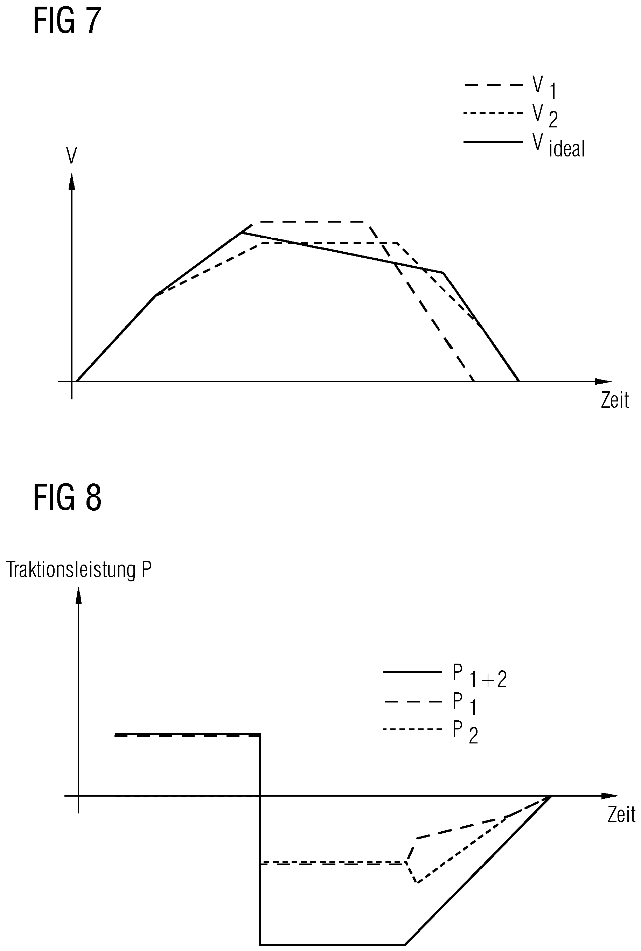

Bei dem in Figur 5 dargestellten Abbremsvorgang sind die beiden Fahrzeuge in gleichen Umfang beteiligt. Abweichend hiervon kann wie in Figur 8 gezeigt vorgegangen werden. Hier ist der Verlauf der Traktionsleistung gezeigt, beginnend mit der Fahrt mit konstanter Geschwindigkeit bis zum Stillstand des Fahrzeugs. Die insgesamt aufzubringende Traktionsleistung P₁₊₂ wird durch die durchgezogene Linie repräsentiert. Diese Gesamttraktionsleistung P₁₊₂ ergibt sich aus der Summe der Traktionsleistungen P₁ und P₂ der beiden Fahrzeuge. Zu Beginn des Bremsvorgangs bremsen beide Fahrzeugs gleich stark. Wenn die Gesamtbremsleistung P₁₊₂ reduziert wird, übernimmt das Fahrzeug 2 einen größeren Teil hiervon. Dadurch, dass gleichzeitig die Bremsleistung P₁ des ersten Fahrzeugs reduziert wird, erhöht sich die Zeit bis zum Stillstand des Fahrzeugs nicht. Durch dieses Vorgehen wird die Batterie des zweiten Fahrzeugs beim regenerativen Bremsen stärker aufgeladen als diejenige des ersten Fahrzeugs.

Figur 6 zeigt eine zweite mögliche Zugkraftverteilung, wobei die Ungleichverteilung bei Beschleunigung mit Teillast eingeführt wird, d.h. vor Erreichen des Hyperbelverlaufs der Zugkraft. Zunächst bringen zur anfänglichen Beschleunigung beide Fahrzeuge die gleiche Zugkraft auf; dies ist vorteilhaft, da nahe dem Stillstand der Strom begrenzt werden sollte, um eine Überhitzung zu verhindern. Dann wird die Zugkraft F_{z1} des Fahrzeugs 1 erhöht und die Zugkraft F_{z2} des Fahrzeugs 2 um den gleichen Betrag reduziert. Auf diese Weise ergibt sich für die Gesamttraktionsleistung P₁₊₂ und die Gesamtzugkraft F_{z1+2} keine Erniedrigung gegenüber der gleichmäßigen Belastung beider Fahrzeuge. Dadurch, dass im niedrigen Geschwindigkeitsbereich die Traktionsleistung des länger fahrenden Fahrzeugs 2 leicht vermindert und bei Fahrzeug 1 entsprechend erhöht wird, kann also die Gesamttraktionsleistung nach Anforderung eingehalten werden.

Der untere Graph der Figur 6 zeigt wieder die Verlustleistung Pᵥ. Da diese, wie oben bereits erläutert, mit zunehmender Traktionsleistung mehr als linear ansteigt, ist eine Leistungsumverteilung zwischen den beiden Fahrzeugen, d.h. eine Erhöhung der Leistungsabgabe des Fahrzeugs 1 bei gleichzeitiger Reduktion der Leistungsabgabe des Fahrzeugs 2, zur Verminderung der sich insgesamt einstellenden Verluste bei kleineren Leistungen sinnvoller.

Durch die zeitweilige Erhöhung der Leistungsabgabe des Fahrzeugs 1 kann sich zeitweilig eine Überlast für die Traktionskomponenten dieses Fahrzeugs ergeben. Diese zeitlich begrenzte Überlast ist jedoch tolerierbar, wenn ausreichend Zeit zur Abkühlung zur Verfügung steht.

In welchem Ausmaß und in welchem Abschnitt der Fahrt eine Leistungsumverteilung durchgeführt wird, hängt insbesondere davon ab, welchen Energiebedarf die beiden Fahrzeuge nach Beendigung der Mehrfachtraktion haben. Aber auch das Einhalten des Fahrplans ist ein wesentliches Kriterium, wie anhand der Geschwindigkeitsverläufe von Figur 7 erläutert wird. Optimal für das schnelle Erreichen der nächsten Haltestelle, z.B. geeignet für Rush Hour Fahrten, ist der Geschwindigkeitsverlauf v₁. Dieser Verlauf entspricht einer Fahrt gemäß Figur 5: zuerst wird mit hoher Beschleunigung die Geschwindigkeit erhöht, dann erfolgt eine Beharrungsfahrt mit konstanter Geschwindigkeit, gefolgt von einem starken Abbremsen bis zum Stillstand. Hier wird, um Fahrtzeit einzusparen, die Beharrungsfahrt möglichst lange beibehalten und der Bremsvorgang erst spät begonnen.

Das Fahren gemäß dem Geschwindigkeitsverlauf v₁ ist energetisch sehr nachteilig, d.h. energieaufwendig. Dies ist v.a. darin begründet, dass die hohe Geschwindigkeit, mit der gefahren wird, in einem hohen Luft- bzw Fahrwiderstand resultiert. Aus energetischer Sicht angestrebt hingegen ist das Fahren gemäß dem Geschwindigkeitsverlauf v_{ideal}. Hierbei schließt sich an die Beschleunigung mit voller Beschleunigungsleistung eine Rollphase an, gefolgt vom Abbremsen. Hierdurch wird allerdings die Fahrtzeit verlängert, so dass diese Fahrweise nur möglich ist, wenn genug Zeitpuffer vorhanden ist. Mit der gleichen Fahrtzeit ist auch eine Fahren mit der Umverteilung der Figur 6 und dem Bremsen gemäß Figur h8 möglich, entsprechend dem Geschwindigkeitsverlauf v₂. Hierdurch können die Phasen der Fahrt maximiert werden, in welchen eine sinnvolle Umverteilung zwischen den beiden Fahrzeugen erfolgen kann. Beim Geschwindigkeitsverlauf v₂ wurde gezielt die an sich erstrebenswerte Rollphase durch eine Konstantfahrt ersetzt, um bei Phasen zu generieren, bei denen bei niedrigen Verlusten umverteilt werden kann. Es gilt also, dass grundsätzlich zwar eine Rollphase energetisch besser als eine Beharrungsfahrt ist und von daher i.d.R. zu bevorzugen. Wenn aber eine starke Ungleichverteilung notwendig ist, um z.B. Fahrplananforderungen einzuhalten, kann statt der normalweise angestrebten Rollphase die Beharrungsfahrt realisiert werden, wobei neben der Ungleichverteilung beim Beschleunigen auch die Ungleichverteilung während der Beharrungsfahrt genutzt werden kann, um Energie umzuverteilen.

Die Steuerung der Umschaltung zwischen Gleich- und Ungleichverteilung bei Doppeltraktion erfolgt durch ein Computerprogramm. Hierzu kann das Computerprogramm Vorgaben ermitteln, welche das beschriebene Fahren in Doppel- oder Mehrfachtraktion ermöglichen. Diese Vorgaben können entweder automatisch vom Computerprogramm umgesetzt werden, oder sie können als Vorschläge an den Fahrzeugführer ausgegeben werden, welcher dann über die Umsetzung entscheidet und das Computerprogramm entsprechend instruiert. Dieses Computerprogramm kann Bestandteil des Fahrerassistenzsystems sein, oder auch mit diesem zusammenwirken.

Als Input benötigt das Computerprogramm zumindest den aktuellen Ladezustand der Batterien, die Verlustkennlinien der Traktionseinheiten und Batterien, sowie den Streckenverlauf in Einzel- und Mehrfachtraktion inklusive der Lademöglichkeiten, so dass der erwartete Energieverbrauch berechnet werden kann. Ein Teil der Berechnungen kann vor der Fahrt erfolgen bzw. eine bereits erfolgte Berechnung kann gespeichert und wiederholt verwendet werden.

Berücksichtigt sollte ferner werden:
- ein Doppel- oder Mehrfachtraktionsverband spart pro Streckenabschnitt aufgrund des reduzierten Luftwiderstands Energie ein gegenüber der Einfachtraktion aller Fahrzeuge des Verbands;
- die Schnelligkeit des Aufladens der Batterien hängt von ihrem Ladezustand ab. D.h. eine Batterie sollte zu einem gewissen Grad entladen werden, um die Rekuperation beim Bremsen effizient nutzen zu können.

- Abhängigkeit des Traktionsbedarfs vom Wetter: bei schlechtem Wetter, d.h. nassen Gleisen, ist ein erhöhter Energiebedarf nötig.
- erstrebenswert ist eine Lebensdauer schonende gleichmäßige Entladung der Traktionsbatterien der beteiligten Fahrzeuge; ein häufiges fast vollständiges Entladen ist unvorteilhaft. Durch Reduktion der Entladetiefe der Traktionsbatterie beim Fahrzeug mit dem größeren Energieverbrauch kann die Lebensdauer dieser Traktionsbatterie erhöht werden.
- Der vorgegebene Fahrplan ist einzuhalten: dies erfordert zweitweise eine starke Beschleunigung, und ermöglicht eventuell Haltepausen an Haltestellen mit Auflademöglichkeit. Das einhalten des Fahrplans wird üblicherweise vom Fahrerassistenzsystem überwacht, welches dem Zugführer die entsprechenden Empfehlungen bzgl der vorzunehmenden Fahrweise gibt. Insbesondere können diese Empfehlungen die Vorgabe von Fahrprofilen gemäß Figur 7 enthalten.

Dieses Computerprogramm ist bei der Fahrzeugsteuerung im aktiven Führerstand angeordnet. Es übernimmt die Masteraufgabe, indem es nicht nur das eigene Fahrzeug, sondern auch das im Verbund fahrende steuert. Es verteilt hierbei die Antriebssteuerung und die Bremskraft über die mehreren Fahrzeuge. Hierzu ist eine fahrzeugübergreifende Signalleitung vorhanden.

Von Vorteil bei der beschriebenen Vorgehensweise ist, dass die Auslegung der Fahrzeuge, insbesondere der Traktionsbatterie, innerhalb einer Baureihe, d.h. letztlich innerhalb eines zu versorgenden Teilnetzes, nicht mehr durch die maximal herausfordernde Strecke vorgegeben. Das heißt, es können einheitliche Flotten mit kleineren Batterien realisiert werden mit entsprechenden Einsparungen an Kosten und Gewicht. Es ist möglich, durch die erhöhte Reichweite aufgrund der asymmetrischen Antriebskraftverteilung bei Mehrfachtraktion weitere durchgebundene Verkehre zu realisieren, die z.B. ein Großzentrum aus einer ländlichen Gegend über eine Direktverbindung anbinden.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird. Die Erfindung ist durch die angehängten Ansprüche definiert.

## Patentansprüche

1. Verfahren zum Betreiben eines Fahrzeugverbands in Doppel- oder Mehrfachtraktion, bei dem
der Fahrzeugverband zumindest ein erstes (1) und ein zweites (2) Fahrzeug umfasst,
die Fahrzeuge jeweils mindestens einen Stromabnehmer (11) zum Fahren auf einer elektrifizierten Strecke und mindestens einen Energiespeicher (12) zum Fahren auf einer nicht-elektrifizierten Strecke aufweisen,
beim Fahren in Doppel- oder Mehrfachtraktion auf einer nicht-elektrifizierten Strecke der Antrieb des Fahrzeugverbands unterschiedlich durch das erste (1) verglichen mit dem zweiten Fahrzeug (2) erfolgt,
**gekennzeichnet dadurch, dass**
das Ausmaß der Unterschiedlichkeit von einer von dem zweiten Fahrzeug (2) nach Beendigung der Doppel- oder Mehrfachtraktion im Energiespeicher (12) benötigten Energie abhängt.

2. Verfahren nach Anspruch 1, bei dem
der Antrieb unterschiedlich durch das erste (1) verglichen mit dem zweiten (2) Fahrzeug erfolgt, indem das erste Fahrzeug (1) mehr antreibt als das zweite Fahrzeug (2),
und/oder
das zweite Fahrzeug (2) mehr elektrisch bremst als das erste Fahrzeug (1),
und/oder
das erste Fahrzeug (1)antreibt, während gleichzeitig das zweite Fahrzeug (2) elektrisch bremst.

3. Verfahren nach Anspruch 1 oder 2, bei dem der Antrieb unterschiedlich durch das erste (1) verglichen mit dem zweiten (2) Fahrzeug erfolgt, indem bei der Beschleunigung des Fahrzeugverbands das erste Fahrzeug (1), insbesondere bei Beschleunigung mit konstanter Traktionsleistung oder bei Beschleunigung mit zunehmender Traktionsleistung, inbesondere bei kleinen oder mittleren Traktionsleistungen, mehr Traktionsleistung abgibt als das zweite Fahrzeug (2).

4. Verfahren nach einem der Ansprüche 1 bis 3, bei dem der Antrieb unterschiedlich durch das erste (1) verglichen mit dem zweiten (2) Fahrzeug erfolgt, indem bei der Beschleunigung des Fahrzeugverbands aus dem Stillstand die Beschleunigung zunächst gleich durch das das erste (1) und das zweite (2) Fahrzeug erfolgt, und im Anschluss bis zum Ende der Beschleunigung mehr durch das erste (1) als durch das zweite (2) Fahrzeug.

5. Verfahren nach einem der Ansprüche 1 bis 3, bei dem der Antrieb unterschiedlich durch das erste (1) verglichen mit dem zweiten (2) Fahrzeug erfolgt, indem bei der Beschleunigung des Fahrzeugverbands aus dem Stillstand die Beschleunigung zunächst gleich durch das das erste (1) und das zweite (2) Fahrzeug erfolgt, dann mehr durch das erste (1) als durch das zweite Fahrzeug (2),
und im Anschluss bis zum Ende der Beschleunigung gleich durch das das erste (1) und das zweite (2) Fahrzeug.

6. Verfahren nach einem der Ansprüche 1 bis 5, bei dem der Antrieb unterschiedlich durch das erste (1) verglichen mit dem zweiten (2) Fahrzeug erfolgt, indem bei Fahren des Fahrzeugverbands mit konstanter Geschwindigkeit die hierfür erforderliche Traktionsleistung vollständig oder überwiegend von dem ersten Fahrzeug (1) erbracht wird.

7. Verfahren nach einem der Ansprüche 1 bis 6, bei dem der Antrieb unterschiedlich durch das erste (1) verglichen mit dem zweiten (2) Fahrzeug erfolgt, indem beim elektrischen Abbremsen des Fahrzeugverbands das zweite Fahrzeug (2), insbesondere bei Beschleunigung mit kleiner oder betragsmäßig abnehmender Traktionsleistung, mehr Bremsenergie rekuperiert als das erste Fahrzeug (1).

8. Verfahren nach einem der Ansprüche 1 bis 7, bei dem das Ausmaß der Unterschiedlichkeit so eingestellt wird, dass nach Beendigung der Doppel- oder Mehrfachtraktion die in den Energiespeichern (12) des ersten (1) und des zweiten (2) Fahrzeugs gespeicherte Energie jeweils ausreichend ist für das Erreichen der nächsten Energiespeicher-Lademöglichkeit oder der erneuten Aufnahme der Doppel- oder Mehrfachtraktion.

9. Verfahren nach einem der Ansprüche 1 bis 8, bei dem das Ausmaß der Unterschiedlichkeit so eingestellt wird, dass nach Beendigung der Doppel- oder Mehrfachtraktion das Verhältnis der in den Energiespeichern (12) des ersten (1) und des zweiten (2) Fahrzeugs gespeicherten Energiemengen gleich dem Verhältnis der für die weitere Fahrt benötigten Energiemengen ist.

10. Computerprogramm, umfassend Befehle, die bei der Ausführung des Programms veranlassen, die Schritte des Verfahrens nach einem der Ansprüche 1 bis 9 auszuführen.

11. Computerlesbarer Datenträger, auf dem das Computerprogramm nach Anspruch 10 gespeichert ist.

12. Datenträgersignal, das das Computerprogramm nach Anspruch 10 überträgt.

## Claims

1. Method for operating a vehicle combination with double-heading or multiple-unit traction, in which the vehicle combination comprises at least a first vehicle (1) and a second vehicle (2),
the vehicles each have at least one pantograph (11) for travelling on an electrified route and at least one energy storage device (12) for travelling on a non-electrified route, the vehicle combination is driven differently by the first vehicle (1) in comparison with the second vehicle (2) when travelling with double-heading or multiple-unit traction on a non-electrified route,
**characterized in that**
the extent of the difference depends on the energy required by the second vehicle (2) in the energy storage device (12) after the end of the double-heading or multiple-unit traction.

2. Method according to Claim 1, in which driving takes place differently by the first vehicle (1) in comparison with the second vehicle (2) in that the first vehicle (1) drives more than the second vehicle (2),
and/or
the second vehicle (2) electrically brakes more than the first vehicle (1),
and/or
the first vehicle (1) drives while the second vehicle (2) electrically brakes at the same time.

3. Method according to Claim 1 or 2, in which driving takes place differently by the first vehicle (1) in comparison with the second vehicle (2) in that, when the vehicle combination is accelerated, the first vehicle (1), in particular when the vehicle combination is accelerated with constant traction power or when the vehicle combination is accelerated with increasing traction power, in particular at low or medium traction powers, outputs more traction power than the second vehicle (2).

4. Method according to any of Claims 1 to 3, in which driving takes place differently by the first vehicle (1) in comparison with the second vehicle (2) in that, when the vehicle combination is accelerated from a standstill, the acceleration initially takes place equally by the first vehicle (1) and the second vehicle (2), and subsequently more by the first vehicle (1) than by the second vehicle (2) until the end of the acceleration.

5. Method according to any of Claims 1 to 3, in which driving takes place differently by the first vehicle (1) in comparison with the second vehicle (2) in that, when the vehicle combination is accelerated from a standstill, the acceleration initially takes place equally by the first vehicle (1) and the second vehicle (2), then more by the first vehicle (1) than by the second vehicle (2),
and subsequently equally by the first vehicle (1) and the second vehicle (2) until the end of the acceleration.

6. Method according to any of Claims 1 to 5, in which driving takes place differently by the first vehicle (1) in comparison with the second vehicle (2) in that, when the vehicle combination is travelling at a constant speed, the traction power required for this purpose is entirely or predominantly provided by the first vehicle (1).

7. Method according to any of Claims 1 to 6, in which driving takes place differently by the first vehicle (1) in comparison with the second vehicle (2) in that, when the vehicle combination is electrically braked, the second vehicle (2), in particular when the vehicle combination is accelerated with a low traction power or a traction power which decreases in terms of absolute value, recuperates more braking energy than the first vehicle (1).

8. Method according to any of Claims 1 to 7, in which the extent of the difference is set such that, after the end of double-heading or multiple-unit traction, the energy stored in the energy storage devices (12) of the first vehicle (1) and the second vehicle (2) is in each case sufficient to reach the next energy storage device charging facility or to resume double-heading or multiple-unit traction.

9. Method according to any of Claims 1 to 8, in which the extent of the difference is set such that, after the end of double-heading or multiple-unit traction, the ratio of the amounts of energy stored in the energy storage devices (12) of the first vehicle (1) and the second vehicle (2) is equal to the ratio of the amounts of energy required for the further journey.

10. Computer program, comprising instructions which, when the program is executed, cause the steps of the method according to any of Claims 1 to 9 to be carried out.

11. Computer-readable data carrier on which the computer program according to Claim 10 is stored.

12. Data carrier signal which communicates the computer program according to Claim 10.

## Revendications

1. Procédé pour faire fonctionner une formation de véhicules en traction double ou multiple, dans lequel
la formation de véhicules comprend au moins un premier véhicule (1) et un deuxième véhicule (2),
les véhicules comprennent chacun au moins un pantographe (11) pour circuler sur une ligne électrifiée et au moins un dispositif de stockage d'énergie (12) pour circuler sur une ligne non électrifiée,
lors de la marche en traction double ou multiple sur une ligne non électrifiée, l'entraînement de la formation de véhicules est assuré différemment par le premier véhicule (1) en comparaison avec le deuxième véhicule (2),
**caractérisé en ce que** l'ampleur de cette différence dépend de la quantité d'énergie dont le deuxième véhicule (2) a encore besoin dans son dispositif de stockage d'énergie (12) après la fin de la traction double ou multiple.

2. Procédé selon la revendication 1, dans lequel
l'entraînement de la formation de véhicules est assuré différemment par le premier véhicule (1) en comparaison avec le deuxième véhicule (2),
de telle manière que le premier véhicule (1) fournit un entraînement plus important que le deuxième véhicule (2), et/ou
le deuxième véhicule (2) exerce un freinage électrique plus important que le premier véhicule (1),
et/ou le premier véhicule (1) fournit l'entraînement pendant que le deuxième véhicule (2) exerce dans le même temps un freinage électrique.

3. Procédé selon la revendication 1 ou 2, dans lequel l'entraînement de la formation de véhicules est assuré différemment par le premier véhicule (1) en comparaison avec le deuxième véhicule (2), de telle manière que lors d'une accélération de la formation de véhicules, notamment lors d'une accélération à puissance de traction constante ou à puissance de traction croissante, en particulier à faible ou moyenne puissance de traction, le premier véhicule (1) délivre une puissance de traction supérieure à celle du deuxième véhicule (2).

4. Procédé selon l'une des revendications 1 à 3, dans lequel l'entraînement de la formation de véhicules est assuré différemment par le premier véhicule (1) en comparaison avec le deuxième véhicule (2), de telle manière que
lors d'une accélération de la formation de véhicules à partir de l'arrêt, l'accélération est d'abord assurée de façon identique par le premier véhicule (1) et le deuxième véhicule (2), et ensuite, jusqu'à la fin de l'accélération, l'accélération est assurée davantage par le premier véhicule (1) que par le deuxième véhicule (2).

5. Procédé selon l'une des revendications 1 à 3, dans lequel l'entraînement de la formation de véhicules est assuré différemment par le premier véhicule (1) en comparaison avec le deuxième véhicule (2), de telle manière que
lors d'une accélération de la formation de véhicules à partir de l'arrêt, l'accélération est d'abord assurée de façon identique par le premier véhicule (1) et le deuxième véhicule (2), puis, l'accélération est assurée davantage par le premier véhicule (1) que par le deuxième véhicule (2),
et ensuite, jusqu'à la fin de l'accélération, l'accélération est assurée de manière identique par le premier véhicule (1) et le deuxième véhicule (2).

6. Procédé selon l'une des revendications 1 à 5, dans lequel l'entraînement de la formation de véhicules est assuré différemment par le premier véhicule (1) en comparaison avec le deuxième véhicule (2), de telle manière que, lors de la circulation de la formation de véhicules à une vitesse constante, la puissance de traction nécessaire est fournie entièrement ou majoritairement par le premier véhicule (1).

7. Procédé selon l'une des revendications 1 à 6, dans lequel l'entraînement de la formation de véhicules est assuré différemment par le premier véhicule (1) en comparaison avec le deuxième véhicule (2), de telle manière que
lors d'un freinage électrique de la formation de véhicules, le deuxième véhicule (2) récupère davantage d'énergie de freinage que le premier véhicule (1), en particulier lors d'une accélération avec une faible puissance de traction ou avec une puissance de traction dont la valeur absolue décroît.

8. Procédé selon l'une des revendications 1 à 7, dans lequel l'ampleur de la différence est réglée de sorte qu'après la fin de la traction double ou multiple, l'énergie stockée dans les dispositifs de stockage d'énergie (12) du premier (1) et du deuxième (2) véhicule est, dans chaque cas, suffisante pour atteindre la prochaine possibilité de recharge des dispositifs de stockage d'énergie ou pour permettre la reprise de la traction double ou multiple.

9. Procédé selon l'une des revendications 1 à 8, dans lequel l'ampleur de la différence est réglée de sorte qu'après la fin de la traction double ou multiple, le rapport des quantités d'énergie stockées dans les dispositifs de stockage d'énergie (12) du premier véhicule (1) et du deuxième véhicule (2) correspond au rapport des quantités d'énergie nécessaires à la poursuite du trajet.

10. Programme informatique comprenant des instructions qui, lorsque le programme est exécuté, amènent à mettre en œuvre les étapes du procédé selon l'une des revendications 1 à 9.

11. Support de données lisible par un ordinateur, sur lequel est stocké le programme informatique selon la revendication 10.

12. Signal porteur de données transportant le programme informatique selon la revendication 10.
